# EUROPEAN PATENT SPECIFICATION

(11) **EP 2 398 210 B1**
(45) Date of publication and mention of the grant of the patent: **16.11.2016**
(21) Application number: 10166333.4
(22) Date of filing: 17.06.2010
(51) Int. Cl.: H04L 29/08, H04W 4/08

(54) **Targeted mobile advertising via user proxy at femto AP**
Gezielte mobile Werbung über einen Benutzerproxy für FEMTO AP
Publicité mobile ciblée via un proxy utilisation à un point d'accès femto

(43) Date of publication of application: 21.12.2011
(73) Proprietor: Huawei Technologies Co., Ltd., Longgang District Shenzhen, Guangdong 518129 (CN)
(72) Inventor: Jie, Lin, 518129, Shenzen (CN)
(74) Representative: Kreuz, Georg Maria

(56) References cited:
- US-A1- 2005 216 519
- US-A1- 2006 265 507
- US-A1- 2009 216 750
- US-A1- 2009 286 540

## Description

### TECHNICAL FIELD

The present invention relates to content-specific data communications.

### BACKGROUND OF THE INVENTION

Today's mobile broadband (MBB) communication networks enable a transmission of user-specific contents such as video information or audio information towards the respective use as for example disclosed by US2006/0265507 A1. Such user-specific contents may be provided by network operators upon subscriptions for certain contents. However, the increasing demand for transmitting subscription-free contents towards users may require providing reliable content information relating to contents which are preferred by users or even by a group of users e.g. within a household. Unfortunately, the radio network may not always have information on user preferences indicating a type of content or applications which are preferred by the group of users.

### SUMMARY OF THE INVENTION

A goal to be achieved by the present invention is to provide an efficient concept for managing content information indicating preferred information contents of a group of users arranged e.g. within the same household.

The invention is based on the finding that an efficient concept for managing content information indicating preferred information contents of a group of users may be achieved by collecting user-specific content preferences of users belonging to the group of users, and by assigning the collected user-specific content preferences as preferences of the group of users.

According to a first aspect, the invention relates to an access point entity, comprising a storage for storing user-specific content preferences, the user-specific content preferences indicating contents associated with each user of a certain group of users, and a processor for aggregating the user-specific content preferences to obtain a group-specific set of content preferences, the group-specific set of content preferences indicating group-specific contents associated with the certain group of users. The storage may form a data base storing the user-specific content preferences including audio or video. Thus, a user preference data base may be established that reflects the type of content and applications preferred by users in a household. Furthermore, a way to compile and distribute well targeted information with the preferred contents for the users in e.g. the household may be provided. Furthermore, multiple communication channels may be used to deliver the well targeted, direct information using e.g. SMS, MMS, emails, personal log in of a website, paper mails, etc.

According to an implementation form of the first aspect, the user-specific content preferences are linked to users by user identifiers, in particular by an International Mobile Subscriber Identities (IMSI). The processor is configured to discard the user identifiers in order to obtain the group-specific set of content preferences. Thus, the user identifiers uniquely identify the users with which the user-specific content preferences are associated. However, the processor may remove the user identifiers in order to delete the association between user-specific content preferences and the specific users. In other words, the group-specific set of content preferences may not comprise any hint towards any specific user.

According to an implementation form of the first aspect, the processor is configured to use a deep packet inspection (DPI) to classify the user-specific content preferences. The user-specific contents preferences may be classified as being video or audio or text or the like.

According to an implementation form of the first aspect, the processor is configured to assign a network identification of the access point entity to the group-specific set of content preferences for identifying the group-specific set of content preferences. Thus, the group-specific set of content preferences may be addressable using the network identification of the access point. However, the group-specific set of content preferences may be associated by any network address enabling determining a location of the group-specific set of content preferences.

According to an implementation form of the first aspect, the processor is configured to identify the users in the certain group of users using a user identifier, in particular an International Mobile Subscriber Identities (IMSI). The user identifier enables the access point entity to determine the user-specific content preferences.

According to an implementation form of the first aspect, the access point entity is further configured to request the users of the certain group of users to transmit the user-specific content preferences towards the access point entity. In order to request the transmission of the user-specific content preferences by the users towards the access point entity, the access point entity may comprise a transmitter transmitting such request.

According to an implementation form of the first aspect, the access point entity is further configured to receive the user-specific content preferences from the users of the certain group of users. By way of example, the access point entity may comprise a receiver being capable of receiving the user-specific content preferences from the users which may transmit the user-specific content preferences towards the access point at entity upon request.

According to an implementation form of the first aspect, the certain group of users is defined by users belonging to the same household. By way of example, the certain group of users may be formed by family members of the same household.

According to an implementation form of the first aspect, the user-specific content preferences may comprise at least one of: video, audio or text messages such as expresses of a short message service (SMS).

According to an implementation form of the first aspect, the processor is configured to merge only the user-specific content preferences to obtain the group-specific set of content preferences. In order to merge the user-specific content preferences to obtain the group-specific set of content preferences, the processor may list only the user-specific content preferences in a look-up table without any reference to the users.

According to an implementation form of the first aspect, the access point entity is further configured to transmit the group-specific set of content preferences towards a communication network. For transmission, the access point entity may comprise a transmitter.

According to an implementation form of the first aspect, the access point entity is further configured to receive a content matching at least one content specified in the group-specific set of content preferences towards the access point entity from a communication network, and to forward the at least one content towards the certain group of users. In order to forward the content towards the certain group of users, the access point entity may comprise a transmitter, e.g. the aforementioned transmitter.

According to a second aspect, the invention relates to a network gateway entity, comprising a receiver for receiving a group-specific set of content preferences from an access point entity, a processor for analyzing the group-specific set of content preferences, and a forwarder for forwarding a content matching at least one content specified in the group-specific set of content preferences towards the access point entity.

According to an implementation form of the second aspect, the network gateway entity is configured to use an identifier of an access point entity to identify the content preference for a certain group of users, in particular for a household.

According to a third aspect, the invention relates to an access point communication method, comprising storing user-specific content preferences, the user-specific content preferences indicating user-specific contents associated with each user of a certain group of users, and aggregating the user-specific content preferences to obtain a group-specific set of content preferences, the group-specific set of content preferences indicating group-specific contents associated with the certain group of users.

According to a fourth aspect, the invention relates to a network gateway communication method, comprising receiving a group-specific set of content preferences from an access point entity, optionally, analyzing the group-specific set of content preferences, and forwarding a content matching at least one content specified in the group-specific set of content preferences towards the access point entity.

These and other objects and advantages are provided by an access point entity, network gateway entity and corresponding methods according to the appended claims 1, 11,13 and 14. Preferred embodiments are defined in the dependent claims.

### BRIEF DESCRIPTION OF THE DRAWINGS

Further embodiments of the invention will be described with respect to the following figures, in which:
Fig. 1 shows an access point entity; and
Fig. 2 shows a network gateway entity.

### DETAILED DESCRIPTION OF EMBODIMENTS OF THE INVENTION

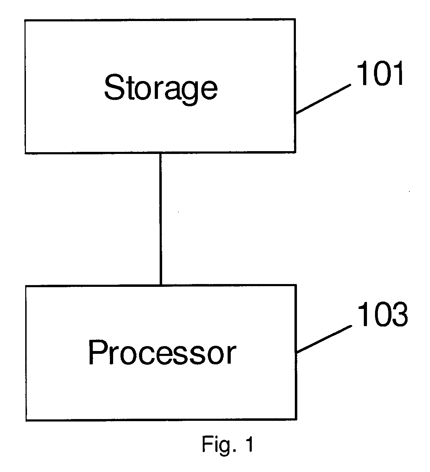

Fig. 1 shows a diagram of an access point entity comprising a storage 101 for storing user-specific content preferences such as audio or video. The storage 101 may thus store a user content and applications preference database with the user-specific content preferences. The user-specific content preferences indicate contents which are preferred by each user of a certain group of users. The access point entity further comprises a processor 103 for aggregating the user-specific content preferences to obtain a group-specific set of content preferences which indicates contents which are preferred by at least one user of the certain group of users. The access point entity may further comprise a receiver and/or a transmitter for receiving and/or transmitting the content preferences.

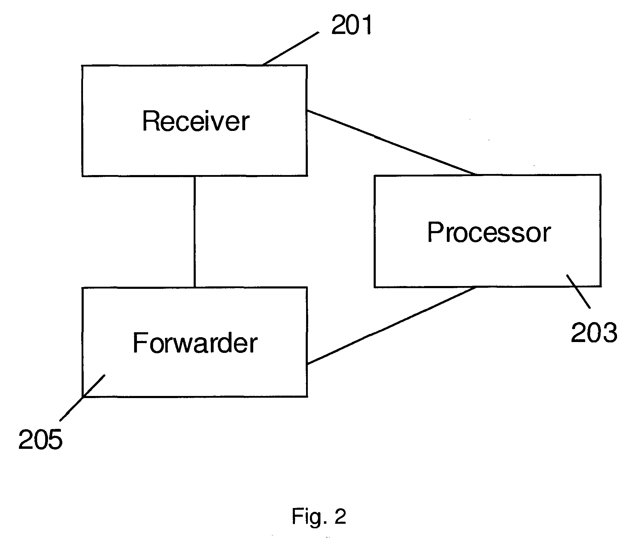

Fig. 2 shows a network gateway entity comprising a receiver 201 for receiving a group-specific set of content preferences from an access point entity, e.g. from the access point entity shown in Fig. 1. The network gateway entity may further comprise a processor 203 for analyzing the group-specific set of content preferences in order to determine which contents are preferred by the certain group of users, and a forwarder 205, e.g. a transmitter, for forwarding a content which matches at least one content specified in the group specific set of content preferences forward the access point entity. The network gateway entity may further be configured to perform the method as shown e.g. in Fig. 1. According to some embodiments, the network gateway entity may comprise a storage for storing a data base with group-specific content preferences as received e.g. over a communication network from e.g. the access point entity shown in Fig. 1.

With reference to Figs. 1 and 2, the access point (AP) entity may be a femto AP and may use a UE (User Equipment) proxy to establish a user preference database by using e.g. a DPI classifier. The UE proxy may aggregate user content and application preference from all users in the same group, e.g. household, and may send the update of household content preference to the network gateway entity. The network gateway entity may be implemented as a femto AG (Access Gateway). Furthermore, the network gateway entity may collect and update its household content preference database accordingly.

Using the information stored in the household content preference database at the network gateway entity, operators may deliver targeted mobile information to the individual household. At the access point entity, e.g. at a femto AP, the content may be further distributed based on the user preference data base.

In order to establish the user content and applications preference database at the access point entity, a set of predefined content and application categories/classes and a usage level for each category/class may be stored. Each entry in the user content preference database may be identified by a unique user identification (IMSI). The database may be updated every time a new user session is established by calculating a new usage level for each content category based on the hit ratio.

According to some embodiments, the content classification may be achieved by implementing at the access point entity, e.g. at a femto AP, a DPI classifier that is used to classify transmitted user content into known content and application categories such as emails, films, music, news, etc.

The content and applications preference database may, according to come embodiments, form a household content and applications preference database. According to some embodiments, aggregating content and applications preference from all users in the household may be performed which may reflect content and applications preference for the household. Each access point entity, e.g. femto AP, may send its household content/apps preference update to its network gateway entity regularly. The network gateway entity may then construct a household content and applications preference database by linking household content and applications preference information which may be sent in by individual access point entities with its access point entity identification (ID).

In order to correctly identify the user as well as the device it is using it may be provided for the access point entity to acquire the IMSI and IMEI (International Mobile Station Equipment Identity) from the users, i.e. from the UEs, which belong to the household. This may be achieved by the access point entity by sending user and device identity request messages to the UE pretending to be the CN. Upon receiving the IMSI and the IMEI from the UE in question the access point entity may establish a mapping table between the UE ID, IMSI and IMEI. This mapping table may then be used to link the content and applications preference database entries with the IMSI and the IMEI. This UE and a device identity acquisition procedure may only be used by the access point entity within its own group of users, e.g. household.

According to some embodiments, the targeted mobile information and content delivery may be realized in two steps.

In step 1, appropriate contents may be distributed to the access point entity based on the household preference database at the network gateway entity. In step 2, the contents destined for the household may be distributed to individual users by the user proxy at the access point entity which may be based on individual user content preference database.

According to some embodiments, the access point entity may also send out targeted emails to individual user's email accounts within its household.

According to some embodiments, the user content preference database may be implemented in the packet CN.

According to some embodiments, a user content and applications preference database may be used at the access point entity for targeted information and content distribution. Furthermore, a household content and applications preference database may be used at the network gateway entity, e.g. at a femto AG, for target information and content distribution.

According to some embodiments, a user content and application sniffer/filter may be employed at the access point entity to detect user content and application preference and to distribute relevant information accordingly.

According to some embodiments, a DPI may be used for the classification of user content and applications.

According to some embodiments, an IMSI may be used to correlate user content preference with individual user within the certain group of users, e.g. within a household.

According to some embodiments, a usage level may be used to quantify user preference on content and applications.

According to some embodiments, the household content and applications preference may be derived by aggregating those preference from all users in the same certain group, e.g. household.

According to some embodiments, the access point entity identification may be used for identifying household content preference.

## Claims

1. An access point entity, comprising
a storage (101) for storing user-specific content preferences, the user-specific content preferences indicating contents associated with each user of a certain group of users; and
a processor (103) for aggregating the user-specific content preferences to obtain a group-specific set of content preferences, the group-specific set of content preferences indicating group-specific contents associated with the certain group of users;
wherein the access point entity is configured to transmit the group-specific set of content preferences towards a communication network; and
wherein the access point entity is further configured to receive a content matching at least one content specified in the group-specific set of content preferences from the communication network;
**characterized in that**,
the access point entity is further configured to request the users of the certain group of users to transmit the user-specific content preferences towards the access point entity; and
the access point entity is further configured to receive the user-specific content preferences from the users of the certain group of users.

2. The access point entity according to claim 1, being further configured to forward the at least one content towards the certain group of users.

3. The access point entity according to any of the preceding claims, wherein the group-specific set of content preferences is transmitted to a network gateway entity and the content matching at least one content specified in the group-specific set of content preferences is received from the network gateway entity.

4. The access point entity according to any of the preceding claims, wherein the user-specific content preferences are linked to users by user identifiers, in particular by an International Mobile Subscriber Identities (IMSI), and wherein the processor (103) is configured to discard the user identifiers in order to obtain the group-specific set of content preferences.

5. The access point entity according to any of the preceding claims, wherein the processor (103) is configured to use a deep packet inspection (DPI) to classify the user-specific content preferences.

6. The access point entity according to any of the preceding claims, wherein the processor (103) is configured to assign a network identification of the access point entity to the group-specific set of content preferences for identifying the group-specific set of content preferences.

7. The access point entity according to any of the preceding claims, wherein the processor (103) is configured to identify the users in the certain group of users using a user identifier, in particular an International Mobile Subscriber Identity (IMSI).

8. The access point entity according to any of the preceding claims, wherein the certain group of users is defined by users belonging to the same household.

9. The access point entity according to any of the preceding claims, wherein the user-specific content preferences comprise at least one of: video, audio and text messages.

10. The access point entity according to any of the preceding claims, wherein the processor (103) is configured to merge only the user-specific content preferences to obtain the group-specific set of content preferences.

11. A network gateway entity, comprising:
a receiver (201) for receiving a group-specific set of content preferences from an access point entity, the group-specific set of content preferences indicating group-specific contents associated with a certain group of users;
the network gateway entity further comprises a forwarder (205) for forwarding a content matching at least one content specified in the group-specific set of content preferences towards the access point entity;
**characterized in that**,
the access point entity is configured to request the users of the certain group of users to transmit the user-specific content preferences towards the access point entity; and
the access point entity is further configured to receive the user-specific content preferences from the users of the certain group of users.

12. The network gateway according to claim 11, being configured to use an identifier of an access point entity to identify the content preference for a certain group of users, in particular for a household.

13. An access point communication method, comprising
storing user-specific content preferences, the user-specific content preferences indicating user-specific contents associated with each user of a certain group of users;
aggregating the user-specific content preferences to obtain a group-specific set of content preferences, the group-specific set of content preferences indicating group-specific contents associated with the certain group of users; transmitting the group-specific set of content preferences towards a communication network; and
receiving a content matching at least one content specified in the group-specific set of content preferences from the communication network;
**characterized in that**,
the method further comprises requesting the users of the certain group of users to transmit the user-specific content preferences towards an access point entity; and
receiving, by the access point entity, the user-specific content preferences from the users of the certain group of users.

14. A network gateway communication method, comprising:
receiving a group-specific set of content preferences from an access point entity, the group-specific set of content preferences indicating group-specific contents associated with a certain group of users; and
forwarding a content matching at least one content specified in the group-specific set of content preferences towards the access point entity;
**characterized in that**,
the method further comprises requesting the users of the certain group of users to transmit the user-specific content preferences towards the access point entity; and
receiving, by the access point entity, the user-specific content preferences from the users of the certain group of users.

## Patentansprüche

1. Zugangspunkteinheit, umfassend:
einen Speicher (101) zum Speichern benutzerspezifischer Inhaltspräferenzen, wobei die benutzerspezifischen Inhaltspräferenzen Inhalte anzeigen, die jedem Benutzer aus einer bestimmten Benutzergruppe zugeordnet sind; und
einen Prozessor (103) zum Ansammeln der benutzerspezifischen Inhaltspräferenzen, um einen gruppenspezifischen Satz von Inhaltspräferenzen zu erhalten, wobei der gruppenspezifische Satz von Inhaltspräferenzen gruppenspezifische Inhalte anzeigt, die der bestimmten Benutzergruppe zugeordnet sind;
wobei die Zugangspunkteinheit konfiguriert ist, den gruppenspezifischen Satz von Inhaltspräferenzen an ein Kommunikationsnetzwerk zu übertragen; und
wobei die Zugangspunkteinheit außerdem konfiguriert ist, einen Inhalt von dem Kommunikationsnetzwerk zu empfangen, wobei der Inhalt mit mindestens einem Inhalt übereinstimmt, der in dem gruppenspezifischen Satz von Inhaltspräferenzen spezifiziert wird;
**dadurch gekennzeichnet, dass**
die Zugangspunkteinheit außerdem konfiguriert ist, die Benutzer der bestimmten Benutzergruppe aufzufordern, die benutzerspezifischen Inhaltspräferenzen an die Zugangspunkteinheit zu übertragen; und
die Zugangspunkteinheit außerdem konfiguriert ist, die benutzerspezifischen Inhaltspräferenzen von den Benutzern der bestimmten Benutzergruppe zu empfangen.

2. Zugangspunkteinheit nach Anspruch 1, die außerdem konfiguriert ist, den mindestens einen Inhalt an die bestimmte Benutzergruppe weiterzuleiten.

3. Zugangspunkteinheit nach einem der vorangehenden Ansprüche, wobei der gruppenspezifische Satz von Inhaltspräferenzen an eine Netzwerk-Gateway-Einheit übertragen wird, wobei der Inhalt von der Netzwerk-Gateway-Einheit empfangen wird und wobei der Inhalt mit mindestens einem Inhalt übereinstimmt, der in dem gruppenspezifischen Satz von Inhaltspräferenzen spezifiziert wird.

4. Zugangspunkteinheit nach einem der vorangehenden Ansprüche, wobei die benutzerspezifischen Inhaltspräferenzen durch Benutzerkennungen insbesondere durch eine internationale Mobilfunkteilnehmerkennung (International Mobile Subscriber Identity, IMSI) mit Benutzern verknüpft werden, und wobei der Prozessor (103) konfiguriert ist, die Benutzerkennungen zu entfernen, um den gruppenspezifischen Satz von Inhaltspräferenzen zu erhalten.

5. Zugangspunkteinheit nach einem der vorangehenden Ansprüche, wobei der Prozessor (103) konfiguriert ist, eine detaillierte Datenpaketprüfung (Deep Packet Inspection, DPI) zu verwenden, um die benutzerspezifischen Inhaltspräferenzen zu klassifizieren.

6. Zugangspunkteinheit nach einem der vorangehenden Ansprüche, wobei der Prozessor (103) konfiguriert ist, dem gruppenspezifischen Satz von Inhaltspräferenzen eine Netzwerkidentifizierung der Zugangspunkteinheit zuzuweisen, um den gruppenspezifischen Satz von Inhaltspräferenzen zu identifizieren.

7. Zugangspunkteinheit nach einem der vorangehenden Ansprüche, wobei der Prozessor (103) konfiguriert ist, die Benutzer in der bestimmten Benutzergruppe mithilfe einer Benutzerkennung insbesondere einer internationalen Mobilfunkteilnehmerkennung (IMSI) zu identifizieren.

8. Zugangspunkteinheit nach einem der vorangehenden Ansprüche, wobei die bestimmte Benutzergruppe durch Benutzer definiert wird, die zum gleichen Haushalt gehören.

9. Zugangspunkteinheit nach einem der vorangehenden Ansprüche, wobei die benutzerspezifischen Inhaltspräferenzen mindestens eine aus Video-, Audio- und Textnachrichten umfassen.

10. Zugangspunkteinheit nach einem der vorangehenden Ansprüche, wobei der Prozessor (103) konfiguriert ist, nur die benutzerspezifischen Inhaltspräferenzen zusammenzufügen, um den gruppenspezifischen Satz von Inhaltspräferenzen zu erhalten.

11. Netzwerk-Gateway-Einheit, umfassend:
einen Empfänger (201) zum Empfangen eines gruppenspezifischen Satzes von Inhaltspräferenzen von einer Zugangspunkteinheit, wobei der gruppenspezifische Satz von Inhaltspräferenzen gruppenspezifische Inhalte anzeigt, die einer bestimmten Benutzergruppe zugeordnet sind;
wobei die Netzwerk-Gateway-Einheit außerdem eine Weiterleitungseinheit (205) zum Weiterleiten eines Inhalts an die Zugangspunkteinheit umfasst, wobei der Inhalt mit mindestens einem Inhalt übereinstimmt, der in dem gruppenspezifischen Satz von Inhaltspräferenzen spezifiziert wird;
**dadurch gekennzeichnet, dass**
die Zugangspunkteinheit konfiguriert ist, die Benutzer der bestimmten Benutzergruppe aufzufordern, die benutzerspezifischen Inhaltspräferenzen an die Zugangspunkteinheit zu übertragen; und
die Zugangspunkteinheit außerdem konfiguriert ist, die benutzerspezifischen Inhaltspräferenzen von den Benutzern der bestimmten Benutzergruppe zu empfangen.

12. Netzwerk-Gateway-Einheit nach Anspruch 11, die konfiguriert ist, eine Kennung einer Zugangspunkteinheit zu verwenden, um die Inhaltspräferenzen für eine bestimmte Benutzergruppe insbesondere für einen Haushalt zu identifizieren.

13. Kommunikationsverfahren für einen Zugangspunkt, umfassend:
Speichern benutzerspezifischer Inhaltspräferenzen, wobei die benutzerspezifischen Inhaltspräferenzen benutzerspezifische Inhalte anzeigen, die jedem Benutzer aus einer bestimmten Benutzergruppe zugeordnet sind;
Ansammeln der benutzerspezifischen Inhaltspräferenzen, um einen gruppenspezifischen Satz von Inhaltspräferenzen zu erhalten, wobei der gruppenspezifische Satz von Inhaltspräferenzen gruppenspezifische Inhalte anzeigt, die der bestimmten Benutzergruppe zugeordnet sind;
Übertragen des gruppenspezifischen Satzes von Inhaltspräferenzen an ein Kommunikationsnetzwerk; und
Empfangen eines Inhalts von dem Kommunikationsnetzwerk, wobei der Inhalt mit mindestens einem Inhalt übereinstimmt, der in dem gruppenspezifischen Satz von Inhaltspräferenzen spezifiziert wird,
**dadurch gekennzeichnet, dass** das Verfahren außerdem umfasst:
Auffordern der Benutzer der bestimmten Benutzergruppe, die benutzerspezifischen Inhaltspräferenzen an eine Zugangspunkteinheit zu übertragen; und
Empfangen der benutzerspezifischen Inhaltspräferenzen von den Benutzern der bestimmten Benutzergruppe durch die Zugangspunkteinheit.

14. Kommunikationsverfahren für eine Netzwerk-Gateway, umfassend:
Empfangen eines gruppenspezifischen Satzes von Inhaltspräferenzen von einer Zugangspunkteinheit, wobei der gruppenspezifische Satz von Inhaltspräferenzen gruppenspezifische Inhalte anzeigt, die einer bestimmten Benutzergruppe zugeordnet sind; und
Weiterleiten eines Inhalts an die Zugangspunkteinheit, wobei der Inhalt mit mindestens einem Inhalt übereinstimmt, der in dem gruppenspezifischen Satz von Inhaltspräferenzen spezifiziert wird;
**dadurch gekennzeichnet, dass** das Verfahren außerdem umfasst:
Auffordern der Benutzer der bestimmten Benutzergruppe, die benutzerspezifischen Inhaltspräferenzen an die Zugangspunkteinheit zu übertragen; und
Empfangen der benutzerspezifischen Inhaltspräferenzen von den Benutzern der bestimmten Benutzergruppe durch die Zugangspunkteinheit.

## Revendications

1. Entité formant point d'accès comprenant :
une mémoire (101) permettant de stocker des préférences de contenus spécifiques à un utilisateur, les préférences de contenus spécifiques à un utilisateur indiquant des contenus associés à chaque utilisateur appartenant à un groupe particulier d'utilisateurs ; et
un processeur (103) permettant de regrouper les préférences de contenus spécifiques à un utilisateur afin d'obtenir un ensemble spécifique à un groupe de préférences de contenus, l'ensemble spécifique à un groupe de préférences de contenus indiquant des contenus spécifiques à un groupe associés à ce groupe particulier d'utilisateurs ;
l'entité formant point d'accès étant configurée pour transmettre à un réseau de communication l'ensemble spécifique à un groupe de préférences de contenus, et l'entité formant point d'accès étant configurée pour recevoir du réseau de communication un contenu correspondant à au moins un contenu spécifié dans l'ensemble spécifique à un groupe de préférences de contenus ;
**caractérisée en ce que** :
l'entité formant point d'accès est en outre configurée pour demander aux utilisateurs du groupe particulier d'utilisateurs de transmettre à l'entité formant point d'accès les préférences de contenus spécifiques à un utilisateur ; et
l'entité formant point d'accès est en outre configurée pour recevoir des utilisateurs du groupe particulier d'utilisateurs les préférences de contenus spécifiques à un utilisateur.

2. Entité formant point d'accès selon la revendication 1, configurée en outre pour transférer le ou les contenus vers le groupe particulier d'utilisateur.

3. Entité formant point d'accès selon l'une quelconque des revendications précédentes, dans laquelle l'ensemble spécifique à un groupe de préférences de contenus est transmis à une entité formant passerelle de réseau, et le contenu correspondant à au moins un contenu spécifié dans l'ensemble spécifique à un groupe de préférences de contenus est reçu en provenance de l'entité formant passerelle de réseau.

4. Entité formant point d'accès selon l'une quelconque des revendications précédentes, dans laquelle les préférences de contenus spécifiques à un utilisateur sont reliées aux utilisateurs grâce à des identificateurs d'utilisateur, en particulier grâce à des identités internationales d'abonnés mobiles (IMSI), et dans laquelle le processeur (103) est configuré pour se débarrasser des identificateurs d'utilisateur afin d'obtenir l'ensemble spécifique à un groupe de préférences de contenus.

5. Entité formant point d'accès selon l'une quelconque des revendications précédentes, dans laquelle le processeur (103) est configuré pour utiliser une inspection approfondie de paquets (DPI) pour classer les préférences de contenus spécifiques à un utilisateur.

6. Entité formant point d'accès selon l'une quelconque des revendications précédentes, dans laquelle le processeur (103) est configuré pour assigner une identification de réseau pour l'entité formant point d'accès à l'ensemble spécifique à un groupe de préférences de contenus afin d'identifier l'ensemble spécifique à un groupe de préférences de contenus.

7. Entité formant point d'accès selon l'une quelconque des revendications précédentes, dans laquelle le processeur (103) est configuré pour identifier les utilisateurs dans le groupe particulier d'utilisateurs en utilisant un identificateur d'utilisateur, en particulier une identité internationale d'abonné mobile (IMSI).

8. Entité formant point d'accès selon l'une quelconque des revendications précédentes, dans laquelle le groupe particulier d'utilisateurs est défini par des utilisateurs appartenant à la même cellule domestique.

9. Entité formant point d'accès selon l'une quelconque des revendications précédentes, dans laquelle les préférences de contenus spécifiques à un utilisateur comprennent au moins l'un parmi : une vidéo, un signal audio et des messages de texte.

10. Entité formant point d'accès selon l'une quelconque des revendications précédentes, dans laquelle le processeur (103) est configuré pour ne fusionner que les préférences de contenus spécifiques à un utilisateur pour obtenir l'ensemble spécifique à un groupe de préférences de contenus.

11. Entité formant passerelle de réseau, comprenant :
un récepteur (201) destiné à recevoir un ensemble spécifique à un groupe de préférences de contenus provenant d'une entité formant point d'accès, l'ensemble spécifique à un groupe de préférences de contenus indiquant les contenus spécifiques à un groupe associés à un certain groupe d'utilisateurs ;
l'entité formant passerelle de réseau comprenant en outre un dispositif de transfert (205) destiné à transférer vers l'entité formant point d'accès un contenu correspondant à au moins un contenu spécifié dans l'ensemble spécifique à un groupe de préférences de contenus ;
**caractérisée en ce que** :
l'entité formant point d'accès est configurée pour demander aux utilisateurs du groupe particulier d'utilisateurs de transmettre les préférences de contenus spécifiques à un utilisateur à l'entité formant point d'accès ; et
l'entité formant point d'accès est en outre configurée pour recevoir les préférences de contenus spécifiques à un utilisateur en provenance des utilisateurs du groupe particulier d'utilisateurs.

12. Passerelle de réseau selon la revendication 11, configurée pour utiliser un identificateur pour une entité formant point d'accès afin d'identifier la préférence de contenu pour un certain groupe d'utilisateurs, en particulier pour une cellule domestique.

13. Procédé de communication de point d'accès, comprenant :
le stockage de préférences de contenus spécifiques à un utilisateur, les préférences de contenus spécifiques à un utilisateur indiquant des contenus spécifiques à un utilisateur associés à chaque utilisateur appartenant à un groupe particulier d'utilisateurs ;
le regroupement des préférences de contenus spécifiques à un utilisateur afin d'obtenir un ensemble spécifique à un groupe de préférences de contenus, l'ensemble spécifique à un groupe de préférences de contenus indiquant des contenus spécifiques à un groupe associés à ce groupe particulier d'utilisateurs ;
la transmission à un réseau de communication de l'ensemble spécifique à un groupe de préférences de contenus ; et
la réception en provenance du réseau de communication d'un contenu correspondant à au moins un contenu spécifié dans l'ensemble spécifique à un groupe de préférences de contenus ;
**caractérisé en ce que** :
le procédé comprend en outre le fait de demander aux utilisateurs du groupe particulier d'utilisateurs de transmettre les préférences de contenus spécifiques à un utilisateur vers l'entité formant point d'accès ; et
le fait de recevoir, par l'entité formant point d'accès, les préférences de contenus spécifiques à un utilisateur en provenance des utilisateurs du groupe particulier d'utilisateurs.

14. Procédé de communication de passerelle de réseau, comprenant :
la réception, en provenance d'une entité formant point d'accès, d'un ensemble spécifique à un groupe de préférences de contenus, l'ensemble spécifique à un groupe de préférences de contenus indiquant des contenus spécifiques à un groupe associés à un groupe particulier d'utilisateurs ; et
le transfert d'un contenu correspondant à au moins un contenu spécifié dans l'ensemble spécifique à un groupe de préférences de contenus vers l'entité formant point d'accès ;
**caractérisé en ce que** :
le procédé comprend en outre le fait de demander aux utilisateurs du groupe particulier d'utilisateurs de transmettre les préférences de contenus spécifiques à un utilisateur vers l'entité formant point d'accès ; et
le fait de recevoir, par l'entité formant point d'accès, les préférences de contenus spécifiques à un utilisateur en provenance des utilisateurs du groupe particulier d'utilisateur.
